# EUROPÄISCHE PATENTSCHRIFT

(11) **EP 1 087 359 B1**
(45) Veröffentlichungstag und Bekanntmachung des Hinweises auf die Patenterteilung: **17.11.2004**
(21) Anmeldenummer: 00119854.8
(22) Anmeldetag: 12.09.2000
(51) Int. Cl.: G08G 1/0969, G01C 21/36

(54) **Verfahren zum Anordnen von Streckeninformation innerhalb einer Strassenkarte**
Method to arrange route information in a road map
Procédé de disposition d'information d'itinéraire sur une carte routière

(30) Priorität: 22.09.1999 DE 19945431
(43) Veröffentlichungstag der Anmeldung: 28.03.2001
(73) Patentinhaber: SIEMENS AKTIENGESELLSCHAFT, 80333 München (DE)
(72) Erfinder: Klein, Bernhard, 93049 Regensburg (DE)

(56) Entgegenhaltungen:
- EP-A- 0 829 704
- WO-A-97/07467
- US-A- 5 831 552

## Beschreibung

Die Erfindung betrifft ein Verfahren zum Anordnen von Streckeninformation, insbesondere von Verkehrsinformation, die einen digital codierten, geographischen Bezugsort enthält, innerhalb einer von einer Anzeigeeinrichtung wiedergegebenen Straßenkarte.

Aus der Zeitschrift auto connect September/Oktober 99, Seite 60 ist bekannt, in eine Kartendarstellung eines Navigationssystems Verkehrsinformation in Form von Symbolen einzublenden. Das Navigationssystem empfängt über Rundfunk digital codierte Verkehrsnachrichten und stellt diese in Form von Symbolen an den entsprechenden Streckenabschnitten dar. Der Benutzer erhält somit einen groben Überblick über eventuelle Störungen des Verkehrs.

Allerdings lassen sich aus der Kartendarstellung keine genauen Angaben über den exakten Ort der Störung, der Natur oder der Nachhaltigkeit der Verkehrsbeeinträchtigung entnehmen.

Ferner ist aus der selben Ausgabe der Zeitschrift auto connect auf Seite 82 ein Navigationsgerät offenbart, das auf einer Hälfte des Bildschirms ein Piktogramm mit dem aktuellen Straßenverlauf und auf der anderen Hälfte des Bildschirms ein Menü darstellt. In dem Menü kann der Punkt Verkehrsinformation ausgewählt werden. Jedoch wird kein Bezug zwischen empfangener Verkehrsinformation und einer Straßenkarte hergestellt.

Aus der Offenlegungsschrift DE 197 14 323 A1 ist bekannt, auf ein herkömmliches Rechnersystem zurückzugreifen, um Verkehrsinformation optisch darzustellen. Auf einer digitalen Straßenkarte werden Verkehrsinformationen entlang dem Verlauf der Straßenzüge mittels leicht erfaßbarer Symbole und/oder verbaler Bezeichnungen optisch dargestellt.

Aus der Patentschrift US 5,864,305 ist ein Verkehrsinformationssystem zum Darstellen von Verkehrsinformation bekannt. Ein Benutzer kann zwischen Informationsebenen wählen, die Symbole, (Verkehrs-)Zeichen oder Text anzeigen. Eine Taste steht zur Verfügung, um eine Meldung in der Rangfolge von Priorität und Eintreffen auszuwählen.

In der EP-A-0829704 wird eine Informationsanzeigeeinheit für' die Fahrzeugnavigation offenbart, bei der in einer Straßenkarte zu detaillierten Informationen passende Symbole angeordnet werden. Die Symbole können mittels eines Touchpanels oder Cursor-Eingabemittels ausgewählt werden, woraufhin das ausgewählte Symbol hervorgehoben dargestellt wird und dessen zugehörige detaillierte Information angezeigt wird.

Es ist ein Ziel der Erfindung, ein Verfahren zum Anordnen von Streckeninformation bereitzustellen, das einem Benutzer Streckeninformation übersichtlich und genau zur Verfügung stellt.

Dieses Ziel wird mit einem Verfahren erreicht, wie es in dem unabhängigen Patentanspruch definiert ist. Vorteilhafte Weiterbildungen der Erfindung sind Gegenstand der Unteransprüche.

Durch die in etwa lagerichtige Darstellung der Streckeninformationen als Symbole oder Piktogramme erhält ein Benutzer einen Überblick über die für ihn relevanten Meldungen. Mit dem Eingabemittel kann er ein Symbol auswählen und die Verkehrsinformation in Worten ausgeben lassen. Auf diese Weise erhält er Informationen über ihn interessierende Ereignisse übersichtlich und detailliert dargeboten. Die Sicherheit im Straßenverkehr wird hierdurch erhöht.

Besonders einfach läßt sich zwischen den Symbolen und damit den zugeordneten Verkehrsinformationen mittels des erfindungsgemäßen Dreh-Druck-Schalters wechseln. Eine schnelle Orientierung des Benutzers auf der Karte wird durch Hervorheben des ausgewählten Symbols, beispielsweise durch Änderung der Farbe, Helligkeit oder des Hintergrunds erleichtert. Besonders günstig ist es dabei, wenn die Wortausgabe der dem Symbol zugeordneten Verkehrsinformation aufgrund einer Einwirkung auf die axiale Position des Dreh-Druck-Schalters erfolgt. Diese axiale Einwirkung kann ein Drücken, Ziehen oder ein Auslenken des Drehgebers oder Drehknopfes sein.

Die Wortausgabe der detaillierten Streckeninformation kann entweder eine Sprachausgabe oder eine Ausgabe von Buchstaben oder Schriftzeichen sein.

Die Auswahl und Bestätigung eines Symbols kann entweder durch gesprochene Befehle mittels eines Spracherkennungssystems oder durch Betätigung von mechanischen Bedienelementen erfolgen. Dabei werden die Funktionen des Auswählens und des Bestätigens eines Symbols über ein einziges Bedienelement, nämlich den Dreh-Druck-Schalter durchgeführt.

Vorzugsweise erhält das Navigationsgerät Streckeninformationen im Wege drahtloser Datenübertragung. Dies kann beispielsweise über eine Rundfunkübertragung, bei der digital codierte Verkehrsinformation zusätzlich zu einem Rundfunkprogramm übertragen wird, oder mittels Mobilfunk geschehen. Für letzteres steht z. B. der Global Automotive Telematics Standard (GATS) zur Verfügung.

Weitere Vorteile, Merkmale und Anwendungsmöglichkeiten der Erfindung ergeben sich aus der Beschreibung in Verbindung mit den Zeichnungen. Es zeigen:
- Figur 1: ein Navigationsgerät mit einer Anzeigeeinrichtung und einer Benutzerschnittstelle,
- Figur 2: eine Straßenkartendarstellung mit einem ausgewählten Symbol,
- Figur 3: die Kartendarstellung von Figur 2 mit einem anderen ausgewählten Symbol,
- Figur 4: die Kartendarstellung von Figur 3 mit zusätzlicher Textinformation,
- Figur 5: ein Menü mit schriftlicher Darstellung einer Streckeninformation,
- Figur 6: eine Textdarstellung einer Streckeninformation und
- Figur 7: eine Kartendarstellung, in die ein Menü eingeblendet ist.

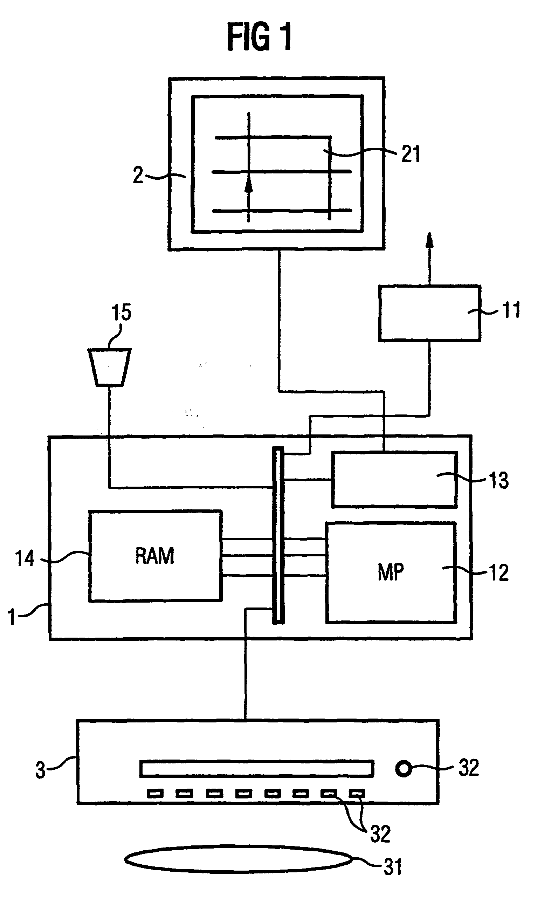

Figur 1 veranschaulicht ein Navigationsgerät 1 mit einem Verkehrsfunkempfänger 11. Der Verkehrsfunkempfänger kann eine Rundfunkempfangseinheit für den Empfang von Verkehrsnachrichten über einen speziellen Übertragungskanal (Traffic Message Channel, TMC) oder ein Mobilfunkgerät für die Übertragung von Streckeninformation nach den Global Automotive Telematics Standard (GATS) aufweisen. Das Navigationsgerät kann sowohl mit einem Rundfunkempfänger als auch mit einer Mobilfunkeinheit verbunden sein.

Einem Mikroprozessor oder einer Recheneinheit 12 ist ein Arbeitsspeicher 14 zugeordnet. Im Arbeitsspeicher 14 wird empfangene Streckeninformation gespeichert.

Die Recheneinheit 12 gibt an einen Benutzer Streckeninformation bezüglich einer errechneten Route entweder akustisch über einen Lautsprecher 15 oder optisch mittels eines Bildcontrollers 13 an eine Anzeigeeinrichtung 2 aus.

Die Anzeigeeinrichtung 2 gibt eine Straßenkarte 21 wieder, auf der die momentane Position des Fahrzeugs des Benutzers durch einen Pfeil symbolisiert ist.

Als Anzeigeeinrichtung kann ein herkömmlicher Bildschirm, ein LCD-Display, ein Display aus organischen Leuchtdioden oder eine andere Punkt-Matrix-Anzeigeeinrichtung verwendet werden.

Das Navigationsgerät 1 weist eine Benutzerschnittstelle 3 auf. In die Benutzerschnittstelle 3 ist ein Laufwerk für einen Massespeicher 31 und genauer für DVD (Digital Versatile Disk) integriert. Der Massespeicher 31 enthält eine Land- oder Straßenkarte in digitalisierter Form.

Über Eingabemittel 32 kann der Benutzer das Navigationsgerät 1 bedienen. Hierzu stehen ihm Tasten und der Dreh-Druck-Schalter zur Verfügung.

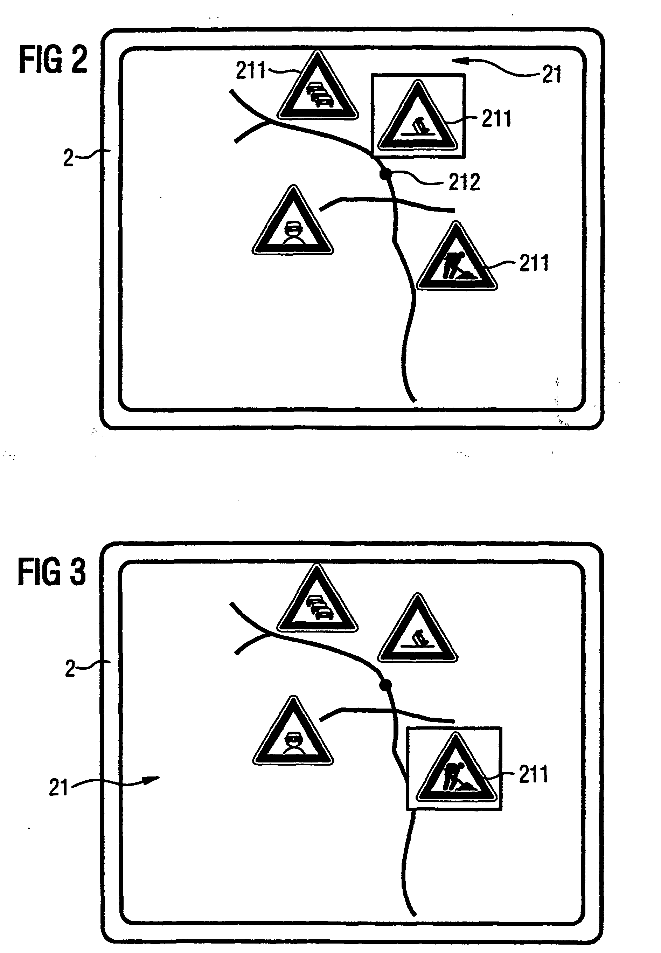

Figur 2 zeigt eine vereinfachte Darstellung einer Straßenkarte 21 mit verschiedenen Symbolen 211, die unterschiedliche Streckeninformationen symbolisieren. Die Streckeninformation wird über den Verkehrsfunkempfänger empfangen. Sie enthält einen geographischen Bezugsort in digital codierter Form. Die Recheneinheit ordnet der empfangenen Streckeninformation das jeweils passende Symbol zu und plaziert es an einer dem geographischen Bezugsort korrespondierenden Stelle 212 in der Straßenkarte 21.

Handelt es sich bei der Streckeninformation 111 um eine Verkehrsinformation, wird ein hiervon betroffenes Straßensegment und die entsprechende Fahrtrichtung mittels einer dunklen Linie markiert. Die Fahrtrichtung wird auf der Straßenkarte kenntlich gemacht, indem die Markierung entweder links oder rechts der dargestellten Straßenmitte plaziert wird.

Eine soeben eingegangene Streckeninformation, bei der es sich um eine Verkehrsinformation über einen Unfall handelt, ist als Symbol auf der dem geographischen Bezugsort entsprechenden Stelle 212 hervorgehoben dargestellt. Zugleich mit der Hervorhebung des Symbols erfolgt dessen Auswahl. Ein Benutzer braucht daher lediglich über ein mechanisches Eingabemittel oder eine Sprachsteuerung die Auswahl zu bestätigen, um eine genauere textuelle Information in Worten zu erhalten.

Grundsätzlich wird dasjenige Symbol automatisch auf der Anzeigeeinrichtung ausgewählt und hervorgehoben, das der vom Navigationssystem errechneten Position in Fahrtrichtung am nächsten liegt. Ausgehend von dem hervorgehobenen Symbol kann der Benutzer durch Drehen des Dreh-Druck-Schalters entlang der vom Navigationsgerät berechneten Route von einem Symbol 211 zum nächsten Symbol springen oder scrollen. Durch die Drehrichtung wird die Richtung bestimmt, in der von einem Symbol zum nächsten Symbol gesprungen wird.

In der Straßenkartendarstellung von Figur 3 hat der Benutzer durch Drehen des Drehgebers zum nächsten Symbol 211 entgegen der Fahrtrichtung gewechselt. Dieses Symbol steht für eine Baustelle.

Jedem der dargestellten Symbole 211 ist virtuell ein genauerer Inhalt der Streckeninformation in Worten zugeordnet, das heißt, es besteht eine Verknüpfung zwischen einem bestimmten Symbol 211 und einer zugehörigen Information in Worten oder in Text.

Die textuelle Streckeninformation kann nähere Angaben zu einer Verkehrsinformation, Information über die Belegung eines ausgewählten Parkplatzes, über eine bestimmte Gaststätte, die Zuordnung eines Hotels zu einer bestimmten Kategorie oder die Belegung des Hotels, Information über eine Tankstelle, über eine Werkstätte oder über eine Sehenswürdigkeit betreffen.

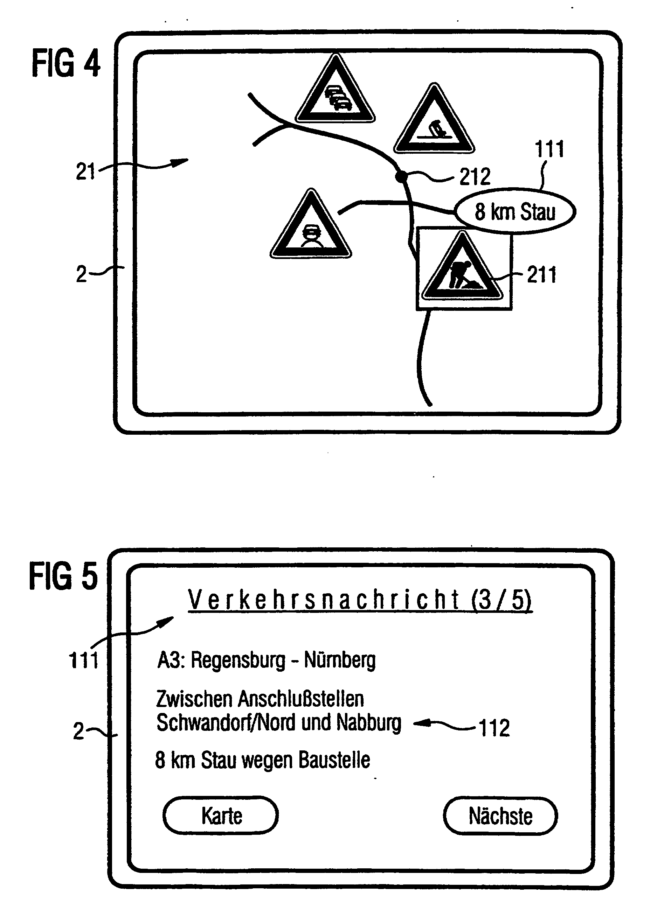

In Figur 4 ist ein Ausführungsbeispiel dargestellt, bei dem ein Benutzer eine kombinierte Darstellungsform aus Symbol und zugeordneter Wortinformation gewählt hat.

Mit der Auswahl eines Symbols 211 erscheint zugleich eine kurze Streckeninformation 111 in Worten. In diesem Fall ist die Intensität einer Verkehrsbeeinträchtigung, und genauer die Länge eines Staus angegeben. Aufgrund dieser genaueren Information kann der Benutzer leichter entscheiden, ob es für ihn günstiger ist, der ursprünglich bestimmten Route zu folgen oder einen Umweg in Kauf zu nehmen.

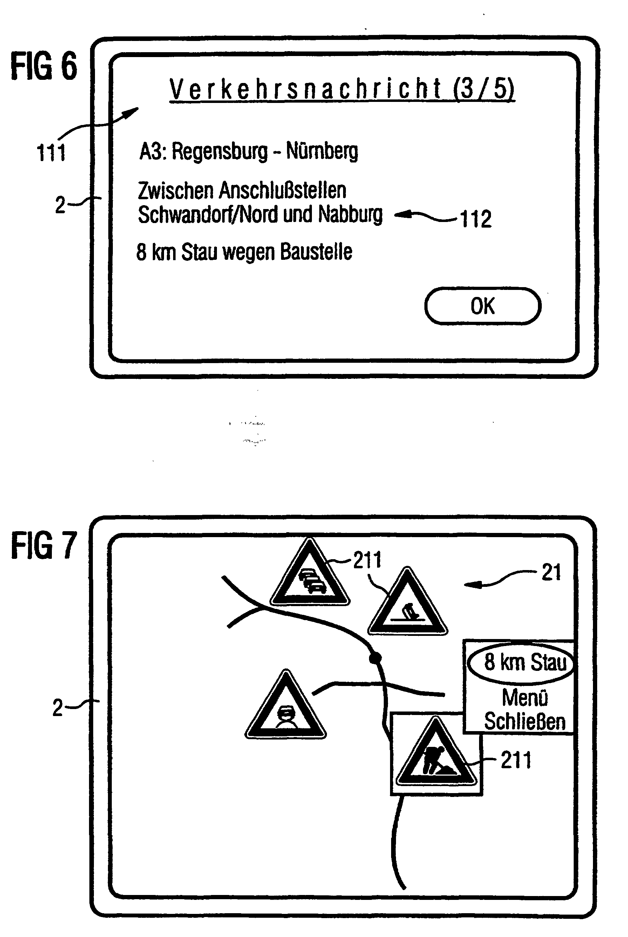

Figur 5 zeigt ein Menü, das im wesentlichen den ganzen Anzeigebereich der Anzeigeeinrichtung 2 ausfüllt. Das Menü gibt eine Streckeninformation 111 in Einzelheiten wieder. Letztere betreffen sowohl die Bezeichnung und Klassifizierung der betroffenen Straße, den von der Streckeninformation betroffenen Abschnitt oder geographischen Bezugsort 112 der Straße und die Intensität und den Grund der Störung.

Im Menü kann der Benutzer auswählen, ob er zur Kartendarstellung zurückkehrt oder ob er die Wortausgabe der nächsten Streckeninformation oder Verkehrsinformation entlang seiner Route erhalten möchte.

Ferner ist angegeben, wieviele Verkehrsnachrichten die Route des Benutzers betreffen und welche er hiervon ausgewählt hat. In diesem Beispiel hat der Benutzer die dritte von insgesamt fünf ("3/5") Verkehrsnachrichten ausgewählt.

In Figur 6 umfaßt die Wortausgabe dieselben Informationen wie in Figur 5. Allerdings stehen dem Benutzer keine Auswahlmöglichkeiten zur Verfügung. Auf Betätigung eines Eingabemittels hin wird in den Kartenmodus zurückgekehrt.

Figur 7 zeigt ein Menü, das einem ausgewählten Symbol 211 zugeordnet ist. Dieses Menü erscheint nach einer Bestätigungsaktion des Benutzers. Durch das Menü erfolgt bereits eine Kurzinformation in Worten, die dem Symbol zugeordnet ist. Mittels des Dreh-Druck-Schalters kann entweder ein weiteres Menü mit der detaillierten Streckeninformation so wie in den Figuren 5 und 6 geöffnet werden oder das Menü geschlossen werden. Zusätzlich kann das Menü durch Betätigung eines speziellen Menü-Knopfes geöffnet werden. In dem Menü können noch weitere gerätespezifische Punkte auswählbar sein.

Das in Figur 7 hervorgehobene Symbol wurde nach Betätigung des Eingabemittels als erstes Symbol 211 hervorgehoben, da es der momentanen Position des Benutzers am nächsten gelegen ist.

Wenn der Benutzer mit dem Dreh-Druck-Schalter das letzte Symbol der Route mit dem Dreh-Druck-Schalter ausgewählt hat und dennoch weiter in die selbe Richtung dreht, so gelangt er in ein Menü, das ihm spezifische Gerätefunktionen bereitstellt. Diese betreffen die Änderung des Kartenmaßstabs, einen Sprung zur nächstgelegenen Streckeninformation oder Verkehrsinformation oder ein Weiterblättern in der Karte.

Alternativ kann der Benutzer über einen speziellen Menüknopf oder bei einem Drücken des Dreh-Druck-Schalters in ein kontextabhängiges Menü gelangen. Dieses stellt dann Einzelheiten zur Streckeninformation bereit, erlaubt ein Weiterblättern in der Karte oder bietet gerätespezifische Menüpunkte an. Insbesondere kann der Benutzer zwischen einer optischen Wiedergabe, einer akustischen Sprachausgabe und einer simultanen optischen und akustischen Ausgabe der in Worten gespeicherten Information wählen.

## Patentansprüche

1. Verfahren zum Anordnen von Streckeninformation (111), die einen digital codierten, geographischen Bezugsort (112) enthält, innerhalb einer von einer Anzeigeeinrichtung (2) wiedergegebenen Straßenkarte (21), mit den Schritten:
- von einem Navigationsgerät (1) wird eine Route zu einem Ziel ermittelt und eine Position errechnet,
- der Streckeninformation (111) wird ein passendes Symbol (211) zugeordnet,
- das Symbol (211) wird an einer dem Bezugsort (112) korrespondierenden Stelle (212) in der Straßenkarte (21) platziert, wobei
- das Symbol (211) auswählbar ist und zugleich mit der Auswahl hervorgehoben dargestellt wird, und
- auf eine Betätigung eines Eingabemittels (32) hin wird die Streckeninformation (111) in Worten ausgegeben,
**dadurch gekennzeichnet, dass**
- das Eingabemittel (32) ein Dreh-Druck-Schalter ist,
- grundsätzlich dasjenige Symbol (211) automatisch ausgewählt und hervorgehoben wird, das der momentanen Position in Fahrtrichtung am nächsten ist,
- ausgehend von dem hervorgehobenen Symbol (211) durch Drehen des Dreh-Druck-Schalters entlang der ermittelten Route von dem hervorgehobenen Symbol (211) zum nächsten Symbol gesprungen oder gescrollt wird, wobei die Drehrichtung des Dreh-Druck-Schalters die Richtung bestimmt, in der von einem Symbol zum nächsten gesprungen wird.

2. Verfahren nach Anspruch 1, **dadurch gekennzeichnet, dass** dann, wenn der Benutzer das letzte Symbol der Route ausgewählt hat und dennoch weiter in dieselbe Richtung dreht, er in ein Menü gelangt, das ihm spezifische Gerätefunktionen bereitstellt.

3. Verfahren nach Anspruch 2, **dadurch gekennzeichnet, dass** die Gerätefunktionen einen Sprung zur nächstgelegenen Sreckeninformation betreffen.

4. Verfahren nach Anspruch 2, **dadurch gekennzeichnet, dass** die Gerätefunktionen eine Änderung des Kartenmaßstabs oder ein Weiterblättern in der Karte betreffen.

5. Verfahren nach einem der vorhergehenden Ansprüche, **dadurch gekennzeichnet, dass** die Streckeninformation (111) auf eine Spracheingabe hin ausgegeben wird.

6. Verfahren nach einem der vorhergehenden Ansprüche 1 bis 4, **dadurch gekennzeichnet, dass** die Streckeninformation (111) mittels Einwirkung auf die axiale Position des Dreh-Druck-Schalters ausgegeben wird.

7. Verfahren nach einem der vorhergehenden Ansprüche, **dadurch gekennzeichnet, dass** die Streckeninformation (111) in Worten optisch und/oder akustisch ausgegeben wird.

8. Verfahren nach einem der vorhergehenden Ansprüche, **dadurch gekennzeichnet, dass** mit der Auswahl eines Symbols (211) zugleich eine kurze Streckeninformation erscheint.

9. Verfahren nach einem der vorhergehenden Ansprüche, **dadurch gekennzeichnet, dass** bei Betätigung des Eingabemittels (32) während der Ausgabe der Streckeninformation (111) unmittelbar diejenige Streckeninformation ausgegeben wird, die dem benachbarten Symbol auf der ermittelten Route zugeordnet ist.

10. Verfahren nach einem der vorhergehenden Ansprüche, **dadurch gekennzeichnet, dass** einem ausgewählten Symbol ein Menü zugeordnet ist, welches nach einer Bestätigungsaktion des Benutzers erscheint und durch das eine dem Symbol zugeordnete Kurzinformation erfolgt.

11. Verfahren nach Anspruch 10, **dadurch gekennzeichnet, dass** mittels des Eingabemittels (32) ein weiteres Menü mit der detaillierten Streckeninformation geöffnet werden kann.

12. Verfahren nach einem der vorhergehenden Ansprüche, **dadurch gekennzeichnet, dass** die Streckeninformation eine Information aus einer oder mehreren der folgenden Kategorien aufweist:
- Verkehrsinformation,
- Information über die Belegung eines Parkplatzes,
- Information über eine Gaststätte oder Hotel,
- Information über eine Tankstelle,
- Information über eine Werkstätte,
- Information über eine Sehenswürdigkeit.

## Claims

1. Method for arranging route information (111) which contains a digitally coded geographic reference location (112) within a road map (21) which is displayed by a display device (2), having the steps:
- a route to a destination is determined by a navigation device (1) and a position is calculated,
- a suitable symbol (211) is assigned to the route information (111),
- the symbol (211) is placed at a position (212) on the road map (21) which corresponds to the reference location (112),
- the symbol (211) being selectable and being represented in highlighted form at the same time as the selection, and
- the route information (111) is output in words in response to actuation of an input means (32),
**characterized in that**
- the input means (32) is a turn and push switch,
- basically that symbol (211) which is closest to the instantaneous position in the direction of travel is automatically selected and highlighted,
- starting from the highlighted symbol (211), the display is changed or scrolled to the next symbol along the route determined for the highlighted symbol (211), by turning the turn and push switch, the direction of rotation of the turn and push switch determining the direction in which the display is changed from one symbol to the next.

2. Method according to Claim 1, **characterized in that** when the user has selected the last symbol of the route, and nevertheless continues turning in the same direction, he arrives at a menu which provides him with specific device functions.

3. Method according to Claim 2, **characterized in that** the device functions relate to a change to the next route information.

4. Method according to Claim 2, **characterized in that** the device functions relate to a change in the scale of the map or to forward movement on the map.

5. Method according to one of the preceding claims, **characterized in that** the route information (111) is output in response to a speech input.

6. Method according to one of the preceding claims 1 to 4, **characterized in that** the route information (111) is output by acting on the axial position of the turn and push switch.

7. Method according to one of the preceding claims, **characterized in that** the route information (111) is output visually and/or audibly in words.

8. Method according to one of the preceding claims, **characterized in that** a brief route information item appears with the selection of a symbol (211).

9. Method according to one of the preceding claims **characterized in that** when the input means (32) is actuated while the route information (111) is being output, that route information which is assigned to the adjacent symbol on the determined route is output directly.

10. Method according to one of the preceding claims, **characterized in that** a selected symbol is assigned a menu which appears after a confirmation action of the user and by means of which a brief information item which is assigned to the symbol is produced.

11. Method according to Claim 10, **characterized in that** a further menu with the detailed route information can be opened using the input means (32).

12. Method according to one of the preceding claims, **characterized in that** the route information has information from one or more of the following categories:-
- traffic information,
- information about the occupation of a car park,
- information about a guest house or hotel,
- information about a petrol station,
- information about a workshop,
- information about a sight.

## Revendications

1. Procédé pour mettre à disposition de l'information d'itinéraire (111), qui contient un lieu de référence (112) géographique et codé sous forme numérique, à l'intérieur d'une carte routière (21) reproduite par un appareil d'affichage (2), comprenant les étapes suivantes :
- par un appareil de navigation (1), un itinéraire vers une destination est déterminée et une position est calculée
- un symbole (211) adapté est attribué à l'information d'itinéraire (111),
- le symbole (211) est placé en un emplacement (212) correspondant au lieu de référence (112) sur la carte routière (21),
- dans lequel le symbole (211) peut être sélectionné et représenté mis en évidence en même temps que le choix, et
- l'information d'itinéraire (111) est éditée en mots à la suite d'une confirmation d'un appareil d'entrée (32),
**caractérisé en ce que**
- le moyen d'entrée (32) est un interrupteur "tourner-pousser",
- par principe le symbole (211) qui est automatiquement sélectionné et mis en évidence est celui qui est le plus proche de la position momentanée dans le sens de marche,
- à partir du symbole (211) mis en évidence, on saute du symbole (211) mis en évidence au prochain symbole ou on effectue un défilement le long de l'itinéraire calculé en tournant l'interrupteur "tourner-pousser", le sens de rotation de l'interrupteur "tourner-pousser" indiquant la direction dans laquelle on saute d'un symbole au prochain.

2. Procédé selon la revendication 1, **caractérisé en ce que**, lorsque l'utilisateur a choisi le dernier symbole du trajet et continue malgré tout de tourner dans la même direction, il arrive dans un menu qui met à sa disposition des fonctions d'appareil spécifiques.

3. Procédé selon la revendication 2, **caractérisé en ce que** les fonctions d'appareil concernent un saut jusqu'à l'information d'itinéraire la plus proche.

4. Procédé selon la revendication 2, **caractérisé en ce que** les fonctions d'appareil concernent une modification de l'échelle de carte ou un nouveau défilement sur la carte.

5. Procédé selon l'une quelconque des revendications précédentes 1 à 4, **caractérisé en ce que** l'information d'itinéraire (111) est éditée dans le sens d'une entrée vocale.

6. Procédé selon l'une quelconque des revendications précédentes, **caractérisé en ce que** l'information d'itinéraire (111) est éditée en agissant sur la position axiale de l'interrupteur "toumer-pousser".

7. Procédé selon l'une quelconque des revendications précédentes, **caractérisé en ce que** l'information d'itinéraire (111) est éditée en mots dans une forme optique et/ou acoustique.

8. Procédé selon l'une quelconque des revendications précédentes, **caractérisé en ce qu'**une brève information d'itinéraire apparaît en même temps que le choix d'un symbole (211).

9. Procédé selon l'une quelconque des revendications précédentes, **caractérisé en ce que**, en cas d'actionnement du moyen d'entrée (32) pendant la sortie de l'information d'itinéraire (111), on édite immédiatement l'information d'itinéraire qui est attribuée au symbole voisin sur le trajet calculé.

10. Procédé selon l'une quelconque des revendications précédentes, **caractérisé en ce qu'**à un symbole sélectionné est attribué un menu qui apparaît après une confirmation de l'utilisateur et par lequel intervient une information brève attribuée au symbole.

11. Procédé selon la revendication 10, **caractérisé en ce qu'**un autre menu avec l'information d'itinéraire détaillée peut être ouvert au moyen d'entrée(32).

12. Procédé selon l'une quelconque des revendications précédentes, **caractérisé en ce que** l'information d'itinéraire présente une information provenant de l'une ou de plusieurs des catégories suivantes :
- information de circulation,
- information sur l'occupation d'un parking,
- information sur un restaurant ou un hôtel,
- information sur une station-service,
- information sur un atelier,
- information sur une curiosité.
